# EUROPÄISCHE PATENTSCHRIFT

(11) **EP 2 275 363 B1**
(45) Veröffentlichungstag und Bekanntmachung des Hinweises auf die Patenterteilung: **23.10.2013**
(21) Anmeldenummer: 10165011.7
(22) Anmeldetag: 04.06.2010
(51) Int. Cl.: B65G 1/137

(54) **Verfahren und Vorrichtung zum automatischen Sortieren von unterschiedlichen leeren Mehrweggetränkebehältern**
Method and device for automatically sorting different empty returnable drink containers
Procédé et dispositif de tri automatique de différents récipients vides réutilisables pour boissons

(30) Priorität: 03.06.2009 DE 102009023809
(43) Veröffentlichungstag der Anmeldung: 19.01.2011
(73) Patentinhaber: Winkler, Walter, 92711 Parkstein (DE)
(72) Erfinder: Winkler, Walter, 92711 Parkstein (DE)
(74) Vertreter: Lang, Christian

(56) Entgegenhaltungen:
- DE-A1- 10 053 166
- DE-A1- 19 509 951
- DE-A1- 19 540 855
- US-A1- 2004 260 423

## Beschreibung

### HINTERGRUND DER ERFINDUNG

### GEBIET DER ERFINDUNG

Die vorliegende Erfindung betrifft ein Verfahren sowie eine Vorrichtung zum automatischen Sortieren von Mehrweggetränkebehalterleergut.

### STAND DER TECHNIK

Bei der Verwendung von Mehrweggetränbehältern, welche aus Gründen der Einsparung von Ressourcen und der Schonung der Umwelt vorteilhaft ist, besteht ein Problem darin, dass das zurücklaufende Leergut der Mehrweggetränkehälter zur Wiederbefüllung mit entsprechenden Getränken aufbereitet werden muss. Der erste Schritt besteht darin, dass die vielen unterschiedlichen Mehrweggetränkebehälter, die es für die verschiedenen Getränke der verschiedensten Getränkehersteller gibt, wieder den einzelnen Abfüllanlagen für die verschiedenen Getränke bei den verschiedenen Getränkeherstellern zugeordnet werden müssen. Üblicherweise werden die Mehrweggetränkebehälter in Einzelhandelsgeschäften, wie Getränkemärkten und dergleichen jedoch zum Rücktransport gemischt zu Verpackungseinheiten zusammengestellt, wie beispielsweise auf Paletten gestapelt, da die Lagerkapazität in den Einzelhandelsgeschäften gering ist und der Umsatz mit einer bestimmten Getränkesorte nicht ausreichend groß ist, um entsprechend sortenreine Paletten oder Verpackungseinheiten eines Typs eines Mehrweggetränkebehälters, wie beispielsweise einer Gatränkekiste eines Getränkeherstellers zusammenzustellen. Entsprechend werden oft Paletten aus einer Vielzahl von unterschiedlichen Mehrweggetränkebehältern verschiedener Hersteller in einem Palettenstapel zusammengeführt und zum Rücktransport zu einem Zentrallager, zum Getränkehersteller oder zu einem Großhändler vorbereitet. In dem Zentrallager bzw. beim Getränkehersteller oder einem Großhändler müssen die entsprechenden Getränkekisten bzw. Mehrweggetränkebehälter entstapelt bzw. depalettiert werden, um eine sortenrein Sortierung der Mehrweggetränkebehälter zu ermöglichen. Die Sortierung erfolgt anschließend entweder manuell oder über bekannte Sortieranlagen. Bei den bekannten Sortieranlagen werden die Mehrweggetränkebebälter in Form von z.B. Getränkekisten auf Transportpfade, wie Transportbänder und dergleichen, aufgegeben, wobei entlang des Transportpfades eine Erkennungs- oder Identifizierungsstation vorgesehen ist, die entsprechend der Identifizierung den Mehrweggetränkebehälter diese auf abgezweigte Abschnitte des Transportpfades leitet. Von dort werden die Mehrweggetränkebehälter sortenrein auf Paletten gestapelt. Diese Sortiervorrichtung ist jedoch auf eine geringe Anzahl verschiedener Typen von Mehrweggetränkebehältem beschränkt, da durch das Vorsehen verschiedener Abzweige für die unterschiedlichen Typen ein großer Raumbedarf besteht. Außerdem ist eine derartige Sortieranlage unflexibel, da bei unterschiedlich anfallenden Mengen an verschiedenen Typen eines Mehrweggetränkebehälters die vorgesehenen Sammelabschnitte an den Transportpfaden nicht ausreichend dimensioniert sind.

Aus dem Dokument DE 100 53 166 A1 ist eine Sortieranlage gemäß dem Oberbegriff des Anspruchs 7 bekannt. Es wird eine Sortier- und Kommissionieranlage für den Getränkefachgroßhandel beschrieben, bei der Leergutbehälter durch Einlagern in sortenreine Schächte sortiert werden. Somit muss Größe und Anzahl der Schächte anhand der zu erwartenden Mengen und Sorten an Leergutbehältern abgeschätzt werden, wobei nur leeren Schächten eine neue Sorte zugeordnet werden kann.

Aus dem Dokument DE 195 09 951 A1 sind ein Verfahren sowie eine Vorrichtung zum unsortierten Lagern von Waren bekannt, bei denen Waren unterschiedlicher Größe anhand ihrer Größe jeweils in geeignete Lücken in Regalebenen eingelagert werden, wobei Größe und Lagerort gespeichert werden, um ein Auslagern zu ermöglichen und die veränderte Regalbelegung zu erfassen.

### OFFENBARUNG DER ERFINDUNG

### AUFGABE DER ERFINDUNG

Es ist deshalb Aufgabe der vorliegenden Erfindung ein Verfahren bzw. eine Vorrichtung zur Sortierung von leeren Mehrweggetränkebehältern bereitzustellen, welches die Probleme des Standes der Technik beseitigt und insbesondere eine voll automatische, platzsparende und flexible Sortierung einer Vielzahl von unterschiedlichen, leeren Mehrweggetränkebehaltermöglicht. Das entsprechende Verfahren soll einfach durchführbar und eine entsprechende Vorrichtung einfach herstellbar und bedienbar sein.

### TECHNISCHE LÖSUNG

Diese Aufgabe wird gelöst durch ein Verfahren zur automatischen Sortierung von unterschiedlichen, leeren Mehrweggetränkebehältern mit den Merkmalen des Anspruchs 1 sowie einer entsprechenden Sortieranlage mit den Merkmalen des Anspruchs 7. Vorteilhafte Ausgestaltungen sind Gegenstand der abhängigen Ansprüche.

Gemäß der vorliegenden Erfindung wird zur Sortierung ein automatisches Lager, insbesondere automatisches Kleinteilelager eingesetzt, in welches die unterschiedlichen leeren Mehrweggetränkebehälter in beliebiger Reihenfolge eingelagert werden. Durch die Identifizierung der Waren und Güter an einer Identifizierungsstation vor der Einlagerung der Waren ist einer Steuerungseinrichtung der Anlage genau bekannt, in welchem Lagerort des automatischen Lagers welcher Typ von Mehrweggetränkebebältern eingelagert ist. Mit dieser information kann über die Steuerungseinrichtung anschließen eine sortenreine Auslagerung der leeren Mehrweggetränkebehälter entsprechend vorgegebener Anforderungen durchgeführt werden. So können beispielsweise immer, wenn bekannt ist, dass eine bestimmte Anzahl von identischen, leeren Mehrweggetränkebehaltern in dem Lager eingelagert ist, welche ausreicht, um eine Verpackungseinheit dieser Waren zu bilden, beispielsweise eine vollständige Palette zu stapeln, diese aus dem Lager der Reihe nach ausgelagert werden, so dass eine unmittelbare Stapelung der Waren möglich ist.

Ein entsprechendes Lager kann als Hochregallager ausgebildet sein, so dass wenig Platzbedarf erforderlich ist und ein schneller Zugriff auf die verschiedenen Lagerorte bzw. Plätze möglich ist.

Das Lager kann entsprechend der Anzahl der zu sortierenden unterschiedlichen, leeren Mehrweggetränkebehältern mit einer Vielzahl von Regalen und Lagerplätzen sowie einer entsprechenden Anzahl von Regalbedienfahrzeugen ausgestattet sein, um auch einen ausreichend hohen Durchsatz an Waren zu ermöglichen.

Im Bezug auf die Sortierung von Mehrweggetränkebehältern kann bei der Auslagerung der sortenreinen Mehrweggetränkebehälter eine weitere Identifizierungsstation vorgesehen werden, mittels der ermittelt werden kann, ob in den sorterein ausgelagerten Mehrweggetränkebehältern, die zu einer Verpackungseinheit, wie beispielsweise einer Palette zusammengeführt werden sollen, die zugehörigen Flaschen in den Mehrweggetränkebehälterm vorgesehen sind oder ob vereinzelt Falschflaschen bzw. Fremdflaschen oder fehlende Flaschen zu beobachten sind. Entsprechend kann die Sortieranlage Bearbeitungsstationen zum Austausch der Fremdflaschen und / oder zum Auffüllen mit typgerechten Flaschen umfassen.

Durch die Verwendung des automatischen Lagers ist bei geringem Platzbedarf eine voll automatische Sortierung einer Vielzahl von unterschiedlichen Waren bzw. Gütern mit hohe Flexibilität möglich.

### KURZE BESCHREIBUNG DER FIGUREN

Weitere Vorteile, Merkmale und Kennzeichen der Erfindung werden bei der nachfolgenden detaillierten Beschreibung eines Ausführungsbeispiels anhand der beigefügten Zeichnungen deutlich werden. Die Zeichnungen zeigen hierbei in rein schematischer Weise in
- Figur 1: eine Übersicht über eine Mehrweggetränkebehälter-Sortieranlage gemäß der vorliegenden Erfindung; und in
- Figur 2: eine perspektivische Darstellung eines Teils eines automatischen Lagers, wie es in der Mehrweggetränkebehälter-Sortieranlage der Figur 1 Verwendung fin- det.

### AUSFÜHRUNGSBEISPIEL

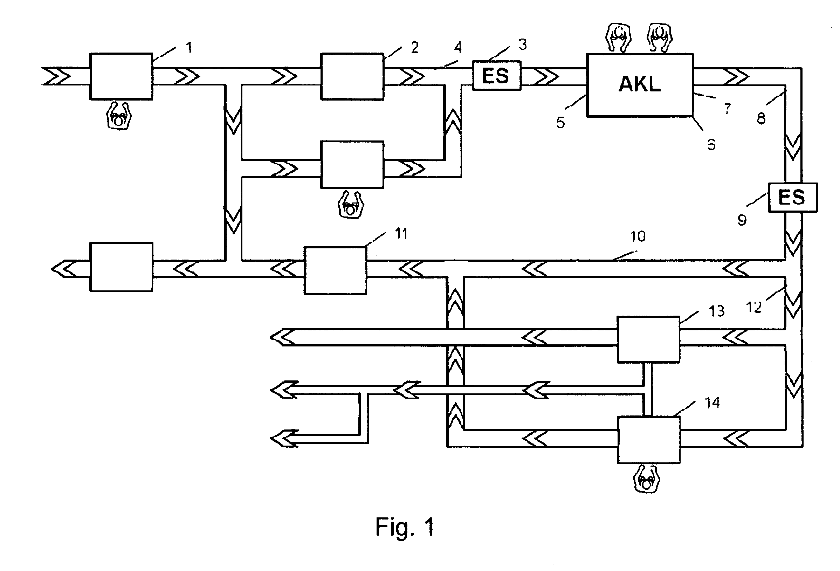

Die Figur 1 zeigt eine schematische Übersicht über eine Sortieranlage für Mehrweggetränkebehälter, insbesondere für Mehrweggetränkebehälter, wie sie nach der Rücknahme der Einzelhandelsgeschäfte bei einem Getränkehersteller, einem Getränkegroßhändler oder einem Zentrallager der Einzelhandelsgeschäfte zurückkommen. Die Mehrweggetränkebehälter sind üblicherweise Flaschenkästen oder Getränkekisten, wie Bierkästen, Mineralwasserkästen etc. Im Gegensatz zu frisch befüllten Getränkemehrwegbehältern, die üblicherweise sortenrein gestapelt und palettiert werden, sind die zurückkommenden leeren Mehrweggetränkebehälter meistens gemischt gestapelt oder palettiert, was bedeutet, dass unterschiedliche Mehrweggetränkebehälter unterschiedlicher Getränkehersteller oder unterschiedliche Mehrweggetränkebehälter für verschiedene Getränkesorten eines Getränkeherstellers in einem Stapel und/oder einer Palette gemischt vorhanden sind. Für die Wiederverwendung der Getränkebehälter und der darin aufgenommenen Flaschen muss deshalb eine Sortierung vorgenommen werden, da nur sortenreine Mehrweggetränkebehälter bzw. Flaschen zur Wiederbefüllung weiter verwendet werden können. Entsprechend müssen die vermischt angelieferten Getränkebehälter sortiert werden, d. h. gleiche Mehrweggetränkebehälter, also Getränkebehälter eines Getränkeherstellers oder gleiche Getränkebehälter für bestimmte Getränkesorten eines Herstellers müssen in Stapel und / oder Paletten zusammengeführt werden.

Hierzu weist die Sortieranlage, wie sie in Figur 1 schematisch dargestellt ist eine Erkennungsstation 1 auf, an der zunächst bestimmt wird, ob die angelieferte Palette mit Mehrweggetränkebehältern bzw. allgemein Verpackungseinheit mit Mehrweggetränkebehältern aus sortenreinen Mehrweggetränkebehältern besteht oder einen gemischten Stapel bzw. eine gemischte Palette darstellt, die sortiert werden muss. Diese Erkennung kann automatisch oder durch einen Bediener erfolgen. Bei der automatischen Erkennung können Bildverarbeitungssysteme, Farberkennungssysteme, Strichcodeidentifizierer, Farbcodeidentifizierer und dergleichen eingesetzt werden. Voraussetzung ist lediglich, dass die Verpackungseinheit mit Mehrweggetränkebehältern für das Identifizierungssystem zugänglich ist und / oder eine entsprechende Kennzeichnung aufweist.

Nach der Erkennungsstation 1 ist auf dem Transportweg für die zu sortierenden Mehrweggetränkebehälter eine Depalettierstation 2 vorgesehen, die die Mehrweggetränkebehälter aus den Stapeln und / oder Palettenanordnungen vereinzelt. Hier können entsprechende bekannte Systeme eingesetzt werden.

Danach werden die vereinzelten Mehrweggetränkebehälter über den Transportpfad 4 einer Identifizierungsstation 3 zugeführt, welche die Art und den Typus des Mehrweggetränkebehälters erfasst bzw. bestimmte Merkmale des Mehrweggetränkebehälters bestimmen kann. Durch die Identifizierungsstation wird es möglich zu jedem einzelnen Mehrweggetränkebehälter festzustellen, von welchem Getränkehersteller dieser stammt und / oder für welche Getränkesorte der Mehrweggetränkebehälter vorgesehen ist. Zumindest sind jedoch bestimmte Merkmale, wie z.B. Farbe und dergleichen bestimmbar. Mit dieser Information wird der Mehrweggetränkebehälter in dem nachfolgenden automatischen Lager, beispielsweise einem sogenannten automatischen Kleinteilelager AKL 6 automatisch eingelagert. Hierzu ist in dem automatischen Lager ein Regalbediengerät vorgesehen, welches an den Regalen entlang fahren kann und die verschiedenen Lagerplätze in dem Regal in den verschiedenen Ebenen und Spalten des Regals mit Mehrweggetränkebehältern bestücken und diese aus dem Regal wieder entnehmen kann. Insbesondere können Hochregallager eingesetzt werden, bei denen die Regale in eine sehr große Höhe gebaut sind, wobei das Lager insgesamt eine Vielzahl von Regalen und eine Vielzahl von Regalbediengeräten oder -fahrzeugen aufweisen kann. Jedes Regal kann eine Vielzahl von Lagerplätzen in einer Vielzahl von Ebenen und Spalten des Regals sowie in mehreren Reihen hintereinander aufweisen. Sollten beispielsweise mehrere Lagerplätze in Reihen hintereinander in den Regalfächern, die durch die Ebenen und Spalten des Regals definiert sind, vorgesehen sein, so können diese Lagerplätze nur mit identischen Mehrweggetränkebehältern bestückt werden, da für das Regalbedienfahrzeug immer nur die Entnahme eines Mehrweggetränkebehälters an der Vorderseite des Regals möglich ist. Ansonsten, wenn das Regalbediengerät jeden Lagerplatz individuell ansteuern kann, ist die Einlagerung der Mehrweggetränkebehälter vollständig beliebig, da das Regalbediengerät jederzeit jeden Lagerplatz anfahren und den benötigten Mehrweggetränkebehälter aus dem Lager holen kann. Entsprechend werden die aus einer Palette stammenden Mehrweggetränkebehälter beliebig und unabhängig von der Art und dem Typ in das automatische Kleinteilelager eingelagert, wobei die Steuerungsvorrichtung den Lagerort und den Typ des an einem bestimmten Lagerort eingelagerten Mehrweggetränkebehälters in entsprechend vorgesehenen Speichermitteln speichert.

Wenn die Steuerungseinrichtung nach bestimmten, frei wählbaren und entsprechend programmierbaren Kriterien feststellt, dass beispielsweise eine bestimmte Anzahl von identischen Mehrweggetränkebehältern im Lager enthalten sind, die zu einer vollständigen Palette bzw. Verpackungseinheit zusammengeführt werden können, so können das gleiche Regalbediengerät wie für die Einlagerung der Mehrweggetränkebehälter bzw. die mehreren Regalbediengeräte, die in dem Lager vorgesehen sind, dazu genutzt werden, die identischen Mehrweggetränkebehälter aus ihren Lagerorten im automatischen Kleinteilelager zu holen und aus dem Lager auszulagern. Entsprechend sind an der Eingangsseite 5 und an der Ausgangsseite 7 des Lagers, welche auch an gleichen Seiten des Lagers angeordnet sein können, entsprechende Übergabestationen vom Transportweg 4 auf das Regalbediengerät (nicht gezeigt) bzw. vom Regalbediengerät zum Transportweg 8 vorgesehen. Auch diese Übergabestationen können mit entsprechend bekannten Vorrichtungen ausgestattet sein. An der Ausgangsseite 7 des automatischen Kleinteilelagers 6 werden entsprechend identische Mehrweggetränkebehälter entsprechend den Anforderungen des Steuerungssystems ausgegeben, wobei durch das Steuerungssystem bekannt ist, welcher Typ an Mehrweggetränkebehälter ausgelagert wird und wie viele davon zur Bildung einer Verpackungseinheit benötigt werden.

Auf dem Transportweg 8 zur Palettierstation 11 kann eine weitere Identifizierungsstation 9 vorgesehen sein, die durch automatische oder manuelle Identifizierung mittels eines Bedieners feststellt, ob alle Flaschen in dem Mehrweggetränkebehälter zu dem Typ an Mehrweggetränkebehälter gehören und / oder ob der Mehrweggetränkebehälter mit entsprechenden Flaschen voll besetzt ist.

Entsprechend dem Ergebnis der Identifizierung bei der zweiten Identifizierungsstation 9 können die Mehrweggetränkebehälter über den Transportweg direkt der Palettierstation 11 zugeführt werden oder über einen By-pass zu weiteren Bearbeitungsstationen 13, 14, bei denen sortenfremde bzw. falsche Flaschen aus den Mehrweggetränkebehältern automatisch (Bearbeitungsstation 13) oder manuell (Bearbeitungsstation 14) entfernt und / oder fehlende sortengerechte Flaschen zur vollständigen Auffüllung des Mehrweggetränkebehälters zugeführt werden.

Die sortierten Mehrweggetränkebehälter können entsprechend ihrem Typ an die entsprechenden Getränkehersteller zurückgeschickt oder zur weiteren Bearbeitung verwendet werden.

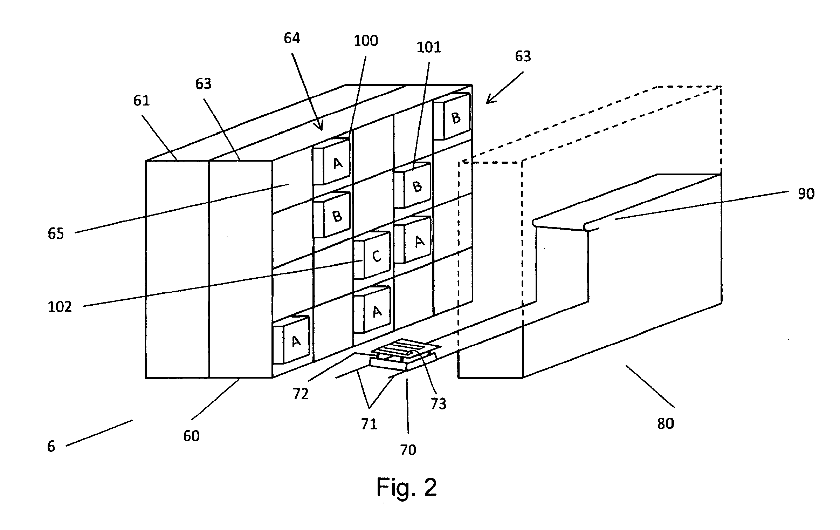

Die Figur 2 zeigt in einer perspektivischen Teilansicht in rein schematischer Weise einen Teil eines automatischen Lagers 6, wie es in der Sortieranlage der Figur 1 Verwendung finden kann.

Wie in der Figur 2 zu sehen ist, weist das automatische Lager 6 Regale 60 bzw. 80 auf, wobei das Regal 80 teilweise nur gestrichelt dargestellt ist. Zwischen den Regalen 60 und 80 ist ein Transportpfad für ein Regalbediengerät 70 vorgesehen, welches sich beispielsweise entlang der Schienen 71 zwischen den Regalen entlang der Längsseite der Regale hin und her bewegen kann. Darüber hinaus kann das Regalbediengerät 70 beispielsweise durch Teleskopstützen 72 oder in anderer geeigneter Art und Weise senkrecht zur Bewegungsrichtung entlang der Schienen 71 nach oben oder unten bewegt werden, so dass sämtliche Regalfächer 65 des Regals 60 bzw. entsprechende Regalfächer des Regals 80 angefahren werden können. Zur Übergabe von Waren bzw. Gütern und insbesondere Mehrweggetränkebehältern in die einzelnen Regalfächer 65 bzw. aus diesen heraus weist das Regalbediengerät schematisch angedeutete Teleskopgreifer 72 auf, mit denen in das Regalfach 65 zur Einlagerung bzw. Auslagerung der Mehrweggetränkebehälter eingegriffen werden kann.

Das Regal 60 weist beispielsweise mehrere Ebenen 63 bzw. Spalten 64 zur Bildung der Regalfächer 65 auf, wobei verschiedene Reihen 61 und 62 beim Regal 60 vorgesehen sind, so dass beispielsweise zwei Mehrweggetränkebehälter hintereinander in einem Regalfach 65 angeordnet sein können. In jedem Regalfach werden sortenrein die Mehrweggetränkebehälter 100, 101 und 102 abgelegt, wobei es beliebig ist, in welchem Regalfach 65 welche Getränkebehälter vorgesehen sind. So ist zu erkennen, dass die Mehrweggetränkebehälter 100 des Typs A über das Regal in verschiedenen Regalfächern verteilt sind, genauso wie die Mehrweggetränkebehälter 101 des Typs B oder die Mehrweggetränkebehälter 102 des Typs C. Entsprechend kann das System beim Einlagern der Mehrweggetränkebehälter nach verschiedenen Kriterien die Lagerorte für die unterschiedlichen Mehrweggetränkebehälter 100, 101, 102 wählen. Beim Auslagern der Mehrweggetränkebehälter, bei denen eine Serie von identischen Mehrweggetränkebehältern 100 bzw. 101 oder 102 nacheinander ausgelagert werden müssen, um eine Verpackungseinheit, beispielsweise einen Stapel zu bilden, weiß das Steuerungsgerät der Anlage wo die entsprechenden Mehrweggetränkebehälter gelagert sind und kann das Regalbediengerät 70 entsprechend ansteuern, um identische Mehrweggetränkebehälter aus den Regalfächern 65 zu holen.

Je nachdem wie viele verschiedene Güter also insbesondere Mehrweggetränkebehälter sortiert werden sollen, kann das Lager entsprechend groß dimensioniert werden, also eine entsprechend große Anzahl von Lagerfächern aufweisen. Entsprechend des geforderten Durchsatzes an Mehrweggetränkebehältern innerhalb einer bestimmten Zeiteinheit können entsprechend viele Regalbediengeräte vorgesehen werden, die entsprechend unabhängig die verschiedenen Regalfächer anfahren können.

Zur Übergabe der Mehrweggetränkebehälter 100, 101, 102 sowohl beim Einlagern als auch beim Auslagern können entsprechende Übergabestationen vorgesehen sein, um den Mehrweggetränkebehälter von dem Regalbediengerät 70 auf ein Transportband 90, wie es in der Figur 2 schematisch dargestellt ist, zu ermöglichen.

Mit der Sortieranlage und dem verwirklichten Verfahren zur Sortierung von Mehrweggetränkebehältern ist ein einfaches und platzsparendes System gegeben, welches eine schnelle und automatische Sortierung der Mehrweggetränkebehälter ermöglicht. Dieses System ist selbstverständlich auf andere Waren und Güter übertragbar, wobei die Sortierung von Mehrweggetränkebehältern eine besonders geeignete und günstige Anwendung darstellt.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in Form von andersartigen Kombinationen der vorgestellten Merkmale als auch Änderungen durch das Weglassen einzelner Merkmale möglich sind, ohne den Schutzbereich der beigefügten Ansprüche zu verlassen.

## Patentansprüche

1. Verfahren zur automatischen Sortierung von leeren Mehrweggetränkebehältern (100, 101, 102), welches folgende Schritte umfasst:
- Identifizieren einer Vielzahl unterschiedlicher leerer Mehrweggetränkebehälter (100, 101,102),
- Einlagern der unterschiedlichen leeren Mehrweggetränkebehälter (100, 101,102) in beliebiger Reihenfolge in ein automatisches Lager (6) mit einer Vielzahl von Lagerplätzen (65), wobei die Belegung jedes Lagerplatzes (65) mit dem identifizierten leeren Mehrweggetränkebehalter (100, 101, 102) erfasst wird,
- Auslagern einer bestimmten Anzahl gleicher leerer Mehrweggetränkebehälter (100, 101, 102) aus dem automatischen Lager (6).

2. Verfahren nach Anspruch 1,
dadurch gekenntzeichnet, dass
das Identifizieren der beliebig angelieferten leeren Mehrweggetränkebehälter (100, 101,102) automatisiert oder durch einen Bediener erfolgt.

3. Verfahren nach einem der vorhergehenden Ansprüche,
**dadurch gekennzeichnet, dass**
das automatische Einlagern mittels mindestens eines Regalfahrzeugs (70) in einem automatischen Kleinteilelager (6) mit mindestens einer Regalreihe (61, 62) erfolgt.

4. Verfahren nach einem der vorhergehenden Ansprüche,
**dadurch gekennzeichnet, dass**
beim Einlagern der Lagerort und die Identität des leeren Mehrweggetränkebehälters (100, 101, 102) gespeichert werden.

5. Verfahren nach einem der vorhergehenden Ansprüche,
**dadurch gekennzeichnet, dass**
die eingelagerten leeren Mehrweggetränkebehälter (100, 101, 102) nach ihrer Identität oder zumindest einem gemeinsamen übereinstimmenden Merkmal aus dem Lager ausgelagert werden.

6. Verfahren nach einem der vorhergehenden Ansprüche
**dadurch gekennzeichnet, dass**
unterschiedliche Mehrweggetränkebehälter (100,101,102) in gemischten Stapeln und/oder auf Paletten mit gemischten Stapeln angeliefert werden, entstapelt und/oder depalettiert werden, gemäß dem Verfahren nach einem der vorhergehenden Ansprüche sortiert werden und in sortenreine Stapel und/oder sortenrein auf Paletten gestapelt werden.

7. Sortieranlage für Mehrweggetränkebehälter zum Sortieren von unterschiedlichen, leeren Mehrweggetränkebehältern (100, 101, 102), insbesondere nach dem Verfahren nach einem der vorhergehenden Ansprüche, mit
einer Identifizierungsstation (3) zur Identifizierung der Identität der leeren Mehrweggetränkebehälter (100, 101, 102),
**gekennzeichnet durch**
ein automatisches Lager (6), und
eine Steuerungseinheit, mittels der die leeren Mehrweggetränkebehälter (100,101, 102) in einem bestimmten Umfang oder völlig beliebig in das Lager (6) eingelagert werden, wobei der Speicherort und die Identität des am Speicherort gelagerten leeren Mehrweggetränkebehälters in einer Speichereinheit der Steuerungseinheit gespeichert werden, und mittels der die leeren Mehrweggetränkebehälter (100, 101, 102) entsprechend ihrer Identität und/oder entsprechend der Übereinstimmung in mindestens einem gespeicherten Merkmal ausgelagert werden.

8. Sortieranlage für Mehrweggetränkebehälter nach Anspruch 7,
**dadurch gekennzeichnet, dass**
die Identifizierungsstation (3) eine vollautomatische Identifizierungsstation (3) ist, die mittels Bilderkennung, Strichcodeidentifizierung, Farbcodeidentifizierung, über Funkidentifizierung mit Funketiketten, Sender-Empfänger-Identifizierung und dergleichen die leeren Mehrweggetränkebehälter identifiziert und/oder bestimmte Merkmale der Güter erfasst.

9. Sortieranlage für Mehrweggetränkebehälter nach Anspruch 7 oder 8,
**dadurch gekennzeichnet, dass**
das automatische Lager (6) ein Regallager (6), insbesondere automatisches Kleinteilelager (6), mit mindestens einem Regalfahrzeug (70) ist, welches die Lagerorte im Regallager individuell anfahren kann, wobei eine Vielzahl von Reihen (61, 62), Spalten (64) und/oder Ebenen (63) pro Regal (60, 80) und/oder eine Vielzahl von Regalen (60, 80) vorgesehen sind.

10. Sortieranlage für Mekweggetränkebehälter nach einem der Ansprüche 7 bis 9,
**dadurch gekennzeichnet, dass**
die Steuerungseinheit eine entsprechend programmtechnisch eingerichtete Datenverarbeitungsanlage umfasst,

11. Sortieranlage für Mehrweggetränkebehälter nach einem der Ansprüche 7 bis 10,
**dadurch gekennzeichnet, dass**
die Vorrichtung Handhabungssysteme für die Güter (100, 101, 102) umfassend Depalettierer, Entstapler, Lagendepalettierer (2), Förderbänder (4, 8), Transporteinrichtungen, Patettierer (11) und dergleichen aufweist.

12. Sortieranlage nach einem der Ansprüche 7 bis 11,
**dadurch gekennzeichnet, dass**
Arbeitsstationen (13, 14) zur Entnahme von Falschflaschen und/oder Auffüllung von Mehrweggetränkebehältern mit Leerflaschen vorgesehen sind.

## Claims

1. Method for automatic sorting of empty returnable beverage containers (100, 101, 102), comprising the following steps:
- Identification of a plurality of different, empty returnable beverage containers (100).
- Storing of the different empty returnable beverage containers (100,101,102) in any order in an automated store (6) having a plurality of storage spaces (65), wherein the occupancy of each storage space (65) with the identified empty returnable beverage container (100, 101, 102) is logged,
- Removal from the automated store (6) of a certain number of the same, empty returnable beverage containers (100, 101, 102).

2. Method in accordance with claim 1,
**characterised by** the fact that
identification of any delivered empty returnable beverage containers (100, 101, 102) is performed by means of automation or by an operator.

3. Method in accordance with any of the previous claims,
**characterised by** the fact that
the automated storing proceeds by means of at least one rack vehicle (70) in an automated small parts store (6) having at least one row of racks (61, 62).

4. Method in accordance with any of the previous claims,
**characterised by** the fact that
during storing, the storage location and the identity of the empty returnable beverage container(100, 101, 102) are saved.

5. Method in accordance with any of the previous claims,
**characterised by** the fact that
that the stored empty returnable beverage containers (100, 101, 102) are removed from the store on the basis of their identity or at least a common, matching characteristic.

6. Method in accordance with any of the previous claims,
**characterised by** the fact that
different empty returnable beverage containers (100, 101, 102) are supplied in mixed stacks and/or on pallets of mixed stacks, are unstacked and/or depaletted, sorted in accordance with the method of any of the previous claims and stacked in stacks of single-type returnable beverage containers and/or on pallets of single-type returnable beverage containers.

7. Sorting installation for returnable beverage containers for sorting different, empty returnable beverage containers (100,101,102), in particular by the method of any of the previous claims, comprising an identification station (3) for identifying the identity of the empty returnable beverage containers (100, 101,102), **characterised by** an automated store (6), and a control unit by means of which the empty returnable beverage containers (100,101, 102) are stored partly or completely arbitrarily in the store (6), wherein the storage location and identity of the empty returnable beverage container stored at the storage location are saved in a storage device of the control unit, and by means of which the empty returnable beverage containers (100,101,102) are removed from storage in line with their identity and/or on the basis of a match with at least one stored characteristic.

8. Sorting installation for returnable beverage containers in accordance with claim 7,
**characterised by** the fact that
the identification station (3) is a fully automated identification station (3), which by means of image recognition, barcode identification, colour-code identification, radio identification with radio labels, transceiver identification and the like, identifies the empty returnable beverage bottles and/or logs certain characteristics of the goods.

9. Sorting installation for returnable beverage containers in accordance with claim 7 or 8,
**characterised by** the fact that
the automated store (6) comprises racking storage (6), especially an automated small parts store (6), with at least one rack vehicle (70), which can navigate to individual storage locations in the racking storage, wherein a plurality of rows (61, 62), columns (64) and/or levels (63) per rack (60, 80) and/or a plurality of racks (60, 80) is provided.

10. Sorting installation for returnable beverage containers in accordance with any of claims 7 to 9,
**characterised by** the fact that
the control unit comprises an appropriately programmed data processing installation.

11. Sorting installation for returnable beverage containers in accordance with any of claims 7 to 10,
**characterised by** the fact that
the apparatus has handling systems for the goods (100, 101, 102), comprising depalletizer, destacker, layer depalletizer (2), conveyor belts (4, 8), transport devices, palletizers (11) and the like.

12. Sorting installation for returnable beverage containers in accordance with any of claims 7 to 11,
**characterised by** the fact that
work stations (13, 14) are provided for removing wrong bottles and/or replenishing returnable beverage containers with empty bottles.

## Revendications

1. Procédé pour le tri automatique de récipients réutilisables pour boissons vides (100, 101, 102) qui comprend les étapes suivantes :
- identification d'une multitude de différents récipients vides réutilisables pour boissons (100, 101, 102),
- stockage des différents récipients vides réutilisables pour boissons (100, 101, 102) dans un ordre quelconque dans un entrepôt automatisé (6) avec une multitude d'emplacements de stockage (65), l'occupation de chaque emplacement de stockage (65) étant enregistrée avec le récipient vide réutilisable pour boissons identifié (100, 101, 102),
- évacuation d'un certain nombre de récipients vides pareils réutilisables pour boissons (100, 101, 102) de l'entrepôt automatisé (6).

2. Procédé selon la revendication 1,
**caractérisé en ce**
**que** l'identification des récipients vides réutilisables pour boissons (100, 101, 102) livrés de manière quelconque se fait de manière automatisée ou par un opérateur.

3. Procédé selon l'une des revendications précédentes,
**caractérisé en ce**
**que** le stockage automatique se fait au moyen d'au moins un véhicule pour rayonnages (70) dans un entrepôt automatisé pour petites pièces (6) avec au moins une rangée de rayonnages (61, 62).

4. Procédé selon l'une des revendications précédentes,
**caractérisé en ce**
**que**, lors du stockage, l'emplacement de stockage et l'identité du récipient réutilisable pour boissons (100, 101, 102) sont mémorisés.

5. Procédé selon l'une des revendications précédentes,
**caractérisé en ce**
**que** les récipients vides réutilisables pour boissons (100, 101, 102) stockés sont évacués de l'entrepôt selon leur identité ou au moins selon une caractéristique concordante commune.

6. Procédé selon l'une des revendications précédentes,
**caractérisé en ce**
**que** différents récipients réutilisables pour boissons (100, 101, 102) sont livrés dans des empilements mixtes et/ou sur des palettes avec des empilements mixtes, enlevés des piles et/ou des palettes, sont triés selon le procédé selon l'une des revendications précédentes et sont empilés dans des piles classées par types et/ou sur des palettes en étant classés par types.

7. Installation de tri pour récipients réutilisables pour boissons pour le tri de différents récipients vides réutilisables pour boissons (100, 101, 102), en particulier selon le procédé selon l'une des revendications précédentes, avec un poste d'identification (3) pour l'identification de l'identité des récipients vides réutilisables pour boissons (100, 101, 102),
**caractérisée par**
un entrepôt automatique (6) et
une unité de commande au moyen de laquelle les récipients vides réutilisables pour boissons (100, 101, 102) sont stockés dans un certain volume ou de manière tout à fait quelconque dans l'entrepôt (6), l'emplacement de stockage et l'identité du récipient vide réutilisable pour boissons stocké à l'emplacement de stockage étant mémorisés dans une unité de stockage de l'unité de commande et au moyen de laquelle les récipients vides réutilisables pour boissons (100, 101, 102) sont évacués selon leur identité et/ou selon la concordance par rapport à au moins une caractéristique stockée.

8. Installation de tri pour récipients réutilisables pour boissons selon la revendication 7,
**caractérisée en ce**
**que** le poste d'identification (3) est un poste d'identification entièrement automatique (3) qui identifie les récipients vides réutilisables pour boissons et/ou certaines caractéristiques des marchandises par reconnaissance d'images, identification de codes barres, identification de codes de couleur, par radio-identification par radio-étiquettes, identification émetteur/récepteur et équivalent.

9. Installation de tri pour récipients réutilisables pour boissons selon la revendication 7 ou 8,
**caractérisée en ce**
**que** l'entrepôt automatique (6) est un entrepôt à rayonnages (6), en particulier un entrepôt pour petites pièces (6), avec au moins un véhicule pour rayonnages (70) qui peut desservir les emplacements de stockage dans l'entrepôt à rayonnages de manière individuelle, une multitude de rangées (61, 62), de fentes (64) et/ou de plans (63) étant prévue par rayonnage (60, 80) et/ou une multitude de rayonnages (60, 80).

10. Installation de tri pour récipients réutilisables pour boissons selon l'une des revendications 7 à 9,
**caractérisée en ce**
**que** l'unité de commande comprend une installation de traitement de données agencée de manière correspondante pour ce qui est de la technique de programme.

11. Installation de tri pour récipients réutilisables pour boissons selon l'une des revendications 7 à 10,
**caractérisée en ce**
**que** le dispositif présente des systèmes de manipulation de marchandises (100, 101, 102) qui comprennent des dispositifs de dépalettisation, de désempilage, de dépalettisation de couches (2), de bandes transporteuses (4, 8), de dispositifs de transport, de palettiseurs (11) et équivalent.

12. Installation de tri selon l'une des revendications 7 à 11,
**caractérisée en ce**
**que** des postes de travail (13, 14) sont prévus pour prendre des mauvaises bouteilles et/ou pour remplir des récipients réutilisables pour boissons avec des bouteilles vides.
